# EUROPÄISCHE PATENTSCHRIFT

(11) **EP 2 825 586 B1**
(45) Veröffentlichungstag und Bekanntmachung des Hinweises auf die Patenterteilung: **06.06.2018**
(21) Anmeldenummer: 13761309.7
(22) Anmeldetag: 27.02.2013
(51) Int. Cl.: C08J 11/10, C08J 11/18

(54) **VERFAHREN ZUM ENZYMATISCHEN ABBAU VON POLYURETHANEN**
PROCESS FOR THE ENZYMATIC DEGRADATION OF POLYURETHANES
PROCÉDÉ DE DÉGRADATION ENZYMATIQUE DE POLYURÉTHANES

(30) Priorität: 12.03.2012 AT 3012012
(43) Veröffentlichungstag der Anmeldung: 21.01.2015
(73) Patentinhaber: Eurofoam GmbH, 4550 Kremsmünster (AT)
(72) Erfinder: ENDER, Wofgang, A-4614 Marchtrenk (AT); WIESBAUER, Herfried, A-4020 Linz (AT); BAUMGARTNER, Günter, A-4407 Dietach (AT); GÜBITZ, Georg, A-8047 Hart bei Graz (AT); SCHNEIDER, Konstantin, A-8010 Graz (AT); GEWESSLER, Ulrike, A-8323 St Marein bei Graz (AT)
(74) Vertreter: Burgstaller, Peter
(86) Internationale Anmeldenummer: PCT/AT2013/050047
(87) Internationale Veröffentlichungsnummer: WO 2013/134801

(56) Entgegenhaltungen:
- WO-A1-98/36086
- WO-A1-2007/029630
- CHRISTENSON E M ET AL: "Enzymatic degradation of poly(ether urethane) and poly(carbonate urethane) by cholesterol esterase", BIOMATERIALS, ELSEVIER SCIENCE PUBLISHERS BV., BARKING, GB, Bd. 27, Nr. 21, 1. Juli 2006 (2006-07-01), Seiten 3920-3926, XP027951334, ISSN: 0142-9612 [gefunden am 2006-07-01]

## Beschreibung

Die Erfindung betrifft ein Verfahren zur stofflichen Verwertung von Polyurethanen.

Polyurethane finden in einem weiten Bereich der Wirtschaft ihre Anwendung. Beispielhaft sei hier der Einsatz im Automobilbau erwähnt, wo Polyurethan häufig auch in Kombination mit anderen Kunststoffen eingesetzt wird. Im Hinblick auf immer strengere Umweltauflagen bezüglich der Recyclingquoten ist die gezielte Verwertung dieser Kunststoffe, insbesondere der Abbau zu Rohstoffen für eine erneute Polymerisation von herausragender Bedeutung. Auch die Verwendung von Polyurethanen im Bereich der Schaumstoffproduktion für die Möbel- und Matratzenherstellung erfordert in immer stärkerem Maß die Entwicklung von Kreislaufprozessen für produktionsbedingten Verschnitt, welcher ja eine sortenreine Basis für Recyclingprozesse darstellt.

Bereits in der Vergangenheit wurden daher verschiedene Ansätze entwickelt Polyurethanreststoffe einer Verwertung zuzuführen.

Neben der wenig zufriedenstellenden Möglichkeit diese Kunststoffe thermisch zu verwerten, welche zusätzlich einen vergleichsweise hohen Aufwand bei der Reinigung der dabei entstehenden Abgase verursacht, ist eine stoffliche Verwertung von Polyurethanen zum Einsatz als Füllstoff in der Teppichproduktion bekannt. Dabei werden PU-Flocken bei der Herstellung von Teppichen in die Unterschicht eingebracht um mehr Volumen und ein weicheres Auftreten zu erreichen.

Aus der CN 101096426 ist ein Verfahren bekannt, bei dem PU-Abfälle zu einem Pulver vermahlen werden, mit neuem Polyol aufgeschlämmt und die Partikel damit bei der Polymerisation in die Matrix eingebaut werden. Dabei können jedoch maximal 15% an pulverisiertem Material verarbeitet werden, welches darüber hinaus nur für Anwendungen im niederen Qualitätssegment in Frage kommen, da die Partikel im Wesentlichen eine Füllerfunktion haben und vergleichsweise schwach mit der Matrix vernetzt sind und darüber hinaus einen vergleichsweise hohen Energieaufwand benötigen, um die erforderlichen Partikelgrößen herzustellen.

Weiter sind aus der Patentliteratur Prozesse für das chemisch Recycling bekannt die einen Abbau des Polymers in seine Grundkomponenten zum Ziel haben um diese wiederum in einer erneuten Polymerisationsreaktion einsetzen zu können. Diese Prozesse basieren auf Hydrolyse bzw. Aminolyseprozessen und sind beispielsweise aus der US 4025559 bekannt. Ein ähnlicher Prozess wird beispielsweise in der EP 1149862 beschrieben. Bei diesem Prozess wird fein gemahlenes PU-Pulver (1µm) in einem ersten Schritt mit Glykol vermischt und bei 150 - 200 °C unter Verwendung von Bariumacetat oder Thalliumacetat als Katalysator über 12 Stunden lang zur Reaktion gebracht. In einem weiteren Schritt erfolgt eine Reaktion mit superkritischem Wasser bei Drücken von 10 MPa - 25 MPa und Temperaturen zwischen 190 °C bis 400 °C. Die sich dabei ergebende Mischung wird in weiteren Schritten fraktioniert, welche wiederum als Rohmaterial für neuerliche Polymerisationsreaktionen eingesetzt werden können.

Im Allgemeinen laufen alle diese Prozesse bei sehr hohen Temperaturen und sehr langen Reaktionszeiten im Batchprozess, sowie unter Einsatz von Katalysatoren ab. Daraus kann sich das Problem des thermischen Abbaus der Polymerketten in Crackreaktionen zu unerwünschten und undefinierten Abbauprodukten oder auch die Bildung von Epoxidringen ergeben, welche zu einer hohen Geruchsbelastung und nachteiligen Vernetzungen der Ketten im recyclierten Rohstoff führt und damit insbesondere die Wiederverwendung einer personennahen Verwendung, insbesondere bei der Schaumstoffproduktion für den Möbel- und Matratzenbau verhindern kann.

Weiter ist aus der JP 09201192 ein Abbauverfahren bekannt, welches auf enzymatischer Basis den Abbau von Ester-Polyurethanen bewirkt. Dabei wird die Esterase im ersten Schritt aus der Kultivierung von Comamonas acidovorans Stämmen gewonnen indem als Kohlenstoffquelle nur Ester-Polyurethan zur Verfügung steht. In einem aufwendigen Aufarbeitungsschritt wird die Esterase abgetrennt und als Reaktionsmedium im sauren Medium für den Abbau von Ester-basierenden Polyurethanen im Batch beigemengt. Nachteilig hierbei kann sich eine vergleichsweise hohe Empfindlichkeit der Enzymaktivität gegenüber Umweltparametern des Comamonas acidovorans Stammes erweisen, ebenso wie das mehrstufige Batchverfahren mit langen Abbauzeiten.

Aus der EP0968300 ist bekannt, dass Polymere, unter anderem Polyesterurethane, mittels Lipasen, Cutinasen und Esterasen rasch abgebaut werden können. Dieser Abbau zielt jedoch lediglich auf die Spaltung der Esterbindung, welche vergleichsweise leicht gespalten wird. Bei einem Abbau von Polyesterurethanen an der Esterbindung werden jedoch die Ketten weitgehend abgebaut und es erfolgt im Wesentlichen keine oder nur eine geringe Spaltung der Carbamatbindung. Dies ist jedoch die Voraussetzung für den gezielten Abbau eines Polyurethans, insbesondere eines Polyetherurethans in seine Polyole und Diamine.

Im Artikel "Enzymatic degratation of poly(ether urethane) and poly(carbonate urethane) by cholesterol esterase" geben Elizabeth M. Christenson et al. die Versuchsergebnisse zum Vergleich von invitro zu invivo Zerfall von Polyurethanen wieder. Dabei wurde ein Versuch zum Zerfall einer Folie aus Polyurethan in wässriger Lösung von Cholesterol Esterase vorgenommen und dokumentiert.

Die Aufgabe der Erfindung ist ein stabiles Verfahren für die Rückgewinnung von Abbauprodukten, insbesondere der Polyole und Diamine, aus Polyurethanen in hoher Qualität bei moderaten Temperaturen und Drücken zu entwickeln.

Erfindungsgemäß wird die Aufgabe dadurch gelöst, dass die Hydrolyse des Polyurethans in einem Wasser enthaltendem polaren Lösemittel also Wasser oder einem Wasser enthaltenden polaren Lösungsmittelgemisch , bevorzugt unter Spaltung der Carbamatbindung, mittels einer Hydrolase der Klasse EC 3 durchgeführt wird und das polare Lösungsmittel teilweise ausgeschleust und in einem separaten Prozess regeneriert wird und die Reaktionsprodukte durch Extraktion mit einem apolaren Lösungsmittel dem Reaktionsgleichgewicht entzogen werden.

Vorteilhafterweise wird in einem ersten Schritt das zu recyclierende Polyurethan mit einem Schredder zerkleinert, eine weitergehende Verarbeitung zu einem Pulver ist vorteilhafterweise nicht notwendig und kann somit zu einem wesentlich günstigerem Verfahren führen.

Wird eine derartige enzymatisch katalysierte Hydrolyse durchgeführt, können die dabei nötigen Temperaturen vorteilhafterweise in moderaten Bereichen gehalten werden und können zu definierten Reaktionsprodukten führen. Als besonders vorteilhaftes Verfahren hat sich die Rückgewinnung der Polyole und Diamine aus Polyurethanen auf Basis von Polyetherpolyolen erwiesen. In einer weiteren vorteilhaften Ausprägung wird für die Isocyanatkomponte zu recyclierenden Polyurethane Diphenylmethandiisocyanat (MDI) oder Toluylendiisocyanat (TDI) verwendet.

Erfindungsgemäß können die Hydrolasen der Klasse EC 3, gemäß Enzym Commission Number, zum gewünschten Abbau führen, besonders haben sich jedoch die Carboxylesterase (EC 3.1.1.1) (z.B. Rapidase), die Triacylglycerol Lipase (EC 3.1.1.3), die Glycosidase (EC 3.2.1.50), die Cutinase (EC 3.1.1.74) zusätzlich auch die Protease von Bacillus licheniformis (EC 3.4.21.14) geeignet.

Besonders vorteilhaft ist die Arylacylamidasen (EC 3.5.1.13) insbesondere aus Nocardia farcinica geeignet.

Diese Enzyme können selektiv mit der Urethanbindung reagieren und so die gewünschte Spaltung des Polyurethans an der Carbamatbindung herbeiführen. Dabei können alle Polyurethane entsprechend abgebaut werden, vorteilhafterweise führt jedoch der Abbau von Polyurethanen aus Polyetherpolyolen zu definierten langkettigen Reaktionsprodukten welche als wertvolle Rohstoffe wieder in der Polymerisation, auch hochqualitativer Schäume wie z.B. Kaltschaum, verwendet werden können.

Vorteilhafterweise entstehen bei diesen Polyurethanen über Zwischenstufen die gewünschten Alkohole (Polyole) welche direkt wieder eingesetzt werden können, sowie Amine (Diamine) welche über weitere Aufarbeitungsschritte wieder zu Isocyanaten umgesetzt werden können, als Reaktionsprodukte.

Überraschenderweise hat sich gezeigt, dass ein Bereich von 30 bis 50 °C, insbesondere zwischen 32 und 47 °C ausreicht, um bei ausreichend hoher spezifischer Aktivität gleichzeitig eine ausreichende langfristige Stabilitäten des Enzyms zu erreichen. Überdies kann mit der enzymatisch katalysierten Hydrolyse eine Spaltung ermöglicht werden ohne zusätzlich Druck beaufschlagen zu müssen.

Außerdem kann sich die Einstellung eines speziellen pH-Bereichs mittels Puffer als besonders vorteilhaft erweisen. Besonders der Bereich oberhalb von pH 7,5 - welcher bis pH 8 mit einem Phosphatpuffer stabilisiert werden kann. Für pH 9 kann ein Tris-Puffer verwendet und oberhalb pH 10 ein Boratpuffer.

Insbesondere vorteilhaft ist der Bereich von pH 9,5 bis pH 11 Vorteilhafterweise werden die Enzyme dabei in Verdünnungen von 1:5 bis 1:20 eingesetzt werden und können dabei Enzymaktivitäten idealerweise über 0,001 [U/ml], besonders über 0,005 [U/ml], insbesondere jedoch über 0,02 [U/ml] zeigen.

Wesentlich ist jedoch die Verwendung geeigneter polarer Lösungsmittel beziehungsweise Lösungsmittelmischungen, die einerseits eine ausreichende Mischbarkeit der Polyole mit dem Lösungsmittel aufweisen und zusätzlich die Eigenschaft haben sollten das zu verarbeitende Polyurethan anquellen zu können um damit den Enzymen entsprechende Angriffspunkte zu ermöglichen.

Eine ausreichende Löslichkeit ist bei der Ablösung der Abbauprodukte von der PU-Oberfläche wichtig, darf aber eine mögliche Extraktion mit apolarem Lösungsmittel nicht negativ beeinflussen. Das polare Lösungsmittel kann aus einem, oder einer Mischung aus zwei oder mehreren, folgender Lösungsmittel bestehen: Petrolether / Aceton / Tetrahydrofuran / Ethylacetat / DMSO / Acetonitril / Ethanol / Wasser

In einer vorteilhaften Ausprägung können in einem 3-Phasensystem in einem weiteren Schritt zumindest ein Teil der Reaktionsprodukte aus der polaren Phase mittels eines apolaren Extraktionsmittels (Recoveryphase) aus dem Reaktionsgleichgewicht entfernt werden, wodurch eine Beschleunigung des Abbaus und ein kontinuierliches Verfahren erzielt werden kann. Das extrahierte Komponentengemisch welches eine Vielzahl von Polyolen und Aminen enthalten kann, insbesondere bei Verarbeitung gemischter Polyurethanrestfraktionen, kann mit weiteren bekannten Verfahrensschritten (Fällung, Destillation, etc.) zu reinen Fraktionen aufgearbeitet werden und kann somit die gewünschten reinen, thermisch nicht belasteten Rohstoffe für den Polymerisationsprozess liefern.

Vorteilhafterweise werden hierfür apolare Extraktionsmittel oder Mischungen daraus, die mit wässrigen Lösungsmittelgemischen nicht mischbar sind, eingesetzt, die Polyole zu extrahieren vermögen, beispielsweise: Petrolether / Diethylether / Ethylacetat

Diese Extraktion wird mit herkömmlichen physikalisch-chemischen Methoden, vorteilhafterweise aber mit der Gegenstromextraktion durchgeführt, wobei sich ein kontinuierlicher Prozess ergeben kann. Die dabei notwendige Regeneration des polaren Lösungsmittels kann durch Ausschleusung einer Teilmenge durchgeführt werden. Weiter kann auch eine notwendige ergänzende Dosierung des Enzyms bei nachlassender Aktivität durch einen Färbetest ermittelt und durchgeführt werden.

Als weiterer Vorteil erweist sich bei diesem Verfahren, dass der Restschaum aber auch inerte Stoffe wie z.B. Füller oder anorganische Verunreinigungen als dritte, inerte Phase verbleiben und regelmäßig abgezogen werden können.

### Referenz Beispiel 1:

Enzymatischer Hydrolyse eines Modellschaums hergestellt analog zur gängigen Industriepraxis aus Toluidendiisocyanat und Glycerolpropoxylat mit MW 2500:
5 g mechanisch zerkleinerter Schaum wurde 5 Tage bei 35°C mit einer 0,5 U/mL Arylacylamidase in 200mM Kaliumphosphatpuffer, pH 11 inkubiert.
Probenahme: Start und nach 5 Tagen. Die Proben wurden anschließend mit HPLC untersucht.

### Referenz

Hydrolyse eines Modellsubstrats zur Simulation einer PU-Bindung: Modellsubstrat: Zur Simulation einer Polyurethanbindung wurde ein Modellsubstrat bestehend aus n-Butanol und 4-Nitrophenylisocyanat hergestellt und mit 0,5 U/mL Arylacylamidase bei pH 8 und 21 °C abgebaut.

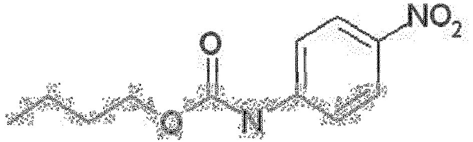

Struktur des Modellsubstrats zur Simulation einer Polyurethanbindung.

Die Bruchstückanalytik wurde mittels HPLC durchgeführt.

### Referenz

Änderung der physikalischen Eigenschaften nach Inkubation eines handelsüblichen Industrieschaumes mit Arylacylamidase. Handelsüblicher Industrieschaum, hergestellt von Eurofoam GmbH, Kremsmünster, Österreich. (PU-Normalschaum des Typs N2348 der Firma Eurofoam)

Ein 10x1x50 cm breiter Schaumstreifen wurde bei 37°C für 3 Tage in 200 mM Kaliumphosphatpuffer bei pH 8 mit Arylacylamidase 0,3U/mL inkubiert.

Anschließend wurde die Probe bei Raumtemperatur getrocknet und das Reißfestigkeit- sowie Dehnungsverhalten nach üblichen ISO Normen gemessen. Als Referenz wurde ein Identischer Schaumstreifen nur mit Puffer inkubiert und ebenfalls bei Raumtemperatur getrocknet.

Sowohl Reißfestigkeit, wie auch das Dehnverhalten wurden durch die enzymatische Inkubation messbar verschlechtert. Im Vergleich zum Referenzexperiment wurde die Reißfestigkeit von 163,7 kPa auf 156 kPa reduziert, sowie die Dehnfähigkeit von 94% auf 86%.

Diese Änderungen zeigen ein Aufbrechen der Carbamatbindungen. Die amorphen Strukturen werden enzymatisch leichter angegriffen wobei die Kristallinität erhöht und damit die Dehnbarkeit verringert wird.

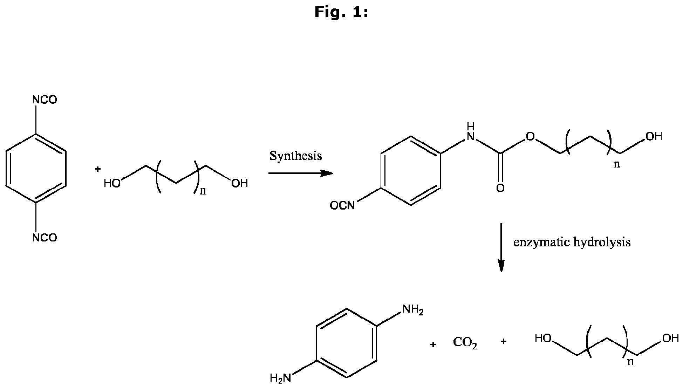

Figur 1 zeigt das allgemeine Schema der Urethanreaktion auf welchem die Polyurethanreaktion basiert, sowie im zweiten Schritt den enzymatisch katalysierten Hydrolyseschritt, welcher unter Spaltung der Carbamatbindung zu den entsprechenden Alkoholen und Aminen der Ausgangsprodukte führt.

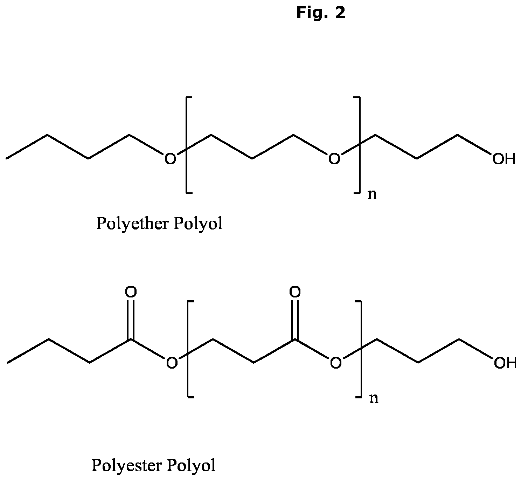

Figur 2 zeigt den schematischen Aufbau von Polyolen auf Ether-und Esterbasis welche die Ausgangsstoffe in der Polymerisation darstellen. Die Polyesterurethane weisen daher zusätzlich zur Carbamatbindung eine Ester-bindung auf welche ebenso in der enzymatischen Hydrolyse gespalten wird und daher einen Abbau zu Ausgangsproduktenermöglicht, jedoch eine größere Fülle an Abbauprodukten bildet, welche dann in den Aufarbeitungsschritten zusätzlich getrennt und aufgearbeitet werden müssen.

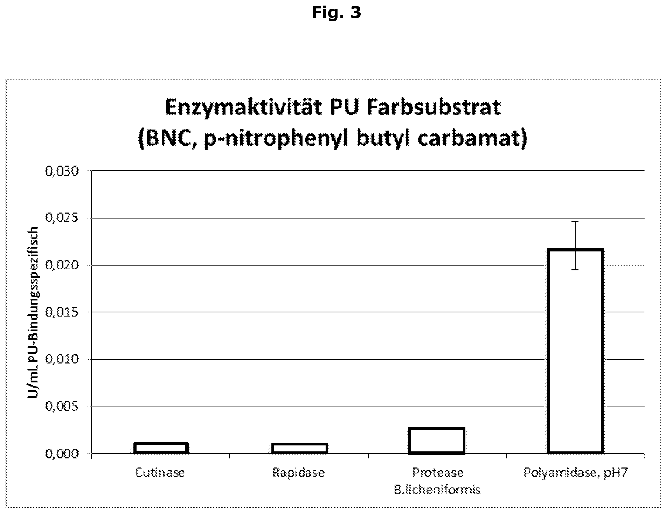

Figur 3 zeigt die Enzymaktivitäten aus den Testreihen mit der Modellsubstanz p-nitrophenyl butyl carbamat.

## Patentansprüche

1. Verfahren zur stofflichen Verwertung von Polyurethanen bei dem das Ausgangsmaterial grob zerkleinert, danach aufgeschlämmt und mit einem Enzym versetzt wird, die Hydrolyse des Polyurethans in Wasser oder einem Wasser enthaltendem polaren Lösungsmittelgemisch mittels zumindest einer Hydrolase der Klasse EC 3 durchgeführt wird, **dadurch gekennzeichnet, dass** das polare Lösungsmittel teilweise ausgeschleust und in einem separaten Prozess regeneriert wird und die Reaktionsprodukte durch Extraktion mit einem apolaren Lösungsmittel dem Reaktionsgleichgewicht entzogen werden.

2. Verfahren nach Anspruch 1, **dadurch gekennzeichnet, dass** das Polyurethan auf Polyetherpolyolen basiert.

3. Verfahren nach Anspruch 1 oder 2, **dadurch gekennzeichnet, dass** das Polyurethan auf einer Polymerisationsreaktion mit Diphenylmethandiisocyanat (MDI) oder Toluylendiisocyanat (TDI) basiert.

4. Verfahren nach einem der vorhergehenden Ansprüche, **dadurch gekennzeichnet, dass** das verwendete Enzym wahlweise eine Hydrolase aus folgender Gruppe ist
- Aryl-Acylamidase (Polyamidase)
- Carboxylesterase (Rapidase)
- Cutinase
- Triacylglycerol Lipase.

5. Verfahren nach einem der vorhergehenden Ansprüche, **dadurch gekennzeichnet, dass** das verwendete Enzym Aryl-Acylamidase (Polyamidase) ist.

6. Verfahren nach einem der vorhergehenden Ansprüche, **dadurch gekennzeichnet, dass** die Reaktionstemperatur zwischen 32°C und 47°C gehalten wird.

7. Verfahren nach einem der vorhergehenden Ansprüche, **dadurch gekennzeichnet, dass** die Reaktion bei einem pH-Wert zwischen pH 7,5 und pH 11 durchgeführt wird.

8. Verfahren nach einem der vorhergehenden Ansprüche, **dadurch gekennzeichnet, dass** die Reaktion bei einem pH-Wert zwischen pH 9,5 und pH 11 durchgeführt wird.

9. Verfahren nach einem der vorhergehenden Ansprüche, **dadurch gekennzeichnet, dass** die Enzymaktivität über 0,005 [U/ml], insbesondere jedoch größer 0,02 [U/ml] eingestellt wird.

10. Verfahren nach einem der vorhergehenden Ansprüche, **dadurch gekennzeichnet, dass** die Verdünnung der Enzyme mit dem Lösungsmittel zwischen 1:5 und 1:20 gewählt wird.

11. Verfahren nach einem der vorhergehenden Ansprüche, **dadurch gekennzeichnet, dass** das polare Lösungsmittel aus einem, oder einer Mischung aus zwei oder mehreren, folgender Lösungsmittel besteht:
Petrolether / Aceton / Tetrahydrofuran / Ethylacetat / DMSO / Acetonitril / Ethanol / Wasser.

12. Verfahren nach einem der vorhergehenden Ansprüche, **dadurch gekennzeichnet, dass** die Abbaureaktion mittels einem 3-Phasensystem im kontinuierlichen Prozess durchgeführt wird, wobei eine polare Reaktionsphase bestehend aus einem oder einer Mischung aus zwei oder mehreren der Lösungsmittel Petrolether / Aceton / Tetrahydrofuran / Ethylacetat / DMSO / Acetonitril / Ethanol / Wasser, eine apolare Recoveryphase bestehend aus oder einer Mischung aus Petrolether / Diethylether / Ethylacetat und eine Festphase aus Inertstoffen wie Füller, anorganische Verunreinigungen und Restschaum verwendet wird.

13. Verfahren nach einem der vorhergehenden Ansprüche, **dadurch gekennzeichnet, dass** die Extraktion der Reaktionsprodukte im Gegenstrom durchgeführt wird.

14. Verfahren nach einem der vorhergehenden Ansprüche, **dadurch gekennzeichnet, dass** das gewonnene Komponentengemisch aus der apolaren Phase einer Destillation zur Gewinnung der reinen Fraktionen unterworfen wird.

## Claims

1. Method for material utilization of polyurethanes wherein the starting material is coarsely crushed, then suspended and an enzyme added to it, and the hydrolysis of the polyurethane is conducted in water or a polar solvent mixture containing water by means of at least one hydrolase of class EC 3, **characterised in that** the polar solvent is partly led off and regenerated in a separate process and the reaction products being extracted from the reaction equilibrium by means of extraction using an non-polar solvent.

2. Method according to claim 1, **characterised in that** the polyurethane is based on polyether polyol.

3. Method according to claims 1 or 2, **characterised in that** the polyurethane is based on a polymerisation reaction with diphenylmethane diisocyanate (MDI) or toluene diisocyanate (TDI) .

4. Method according to one of the preceding claims **characterised in that** the used enzyme is optionally a hydrolase of one of the following groups:
- aryl-acylamidase (polyamidase)
- carboxylesterase (rapidase)
- cutinase
- triacylglycerol lipase.

5. Method according to one of the preceding claims **characterised in that** the used enzyme is an aryl-acylamidase (polyamidase).

6. Method according to one of the preceding claims, **characterized in that** the reaction temperature is kept between 32° C and 47° C.

7. Method according to one of the preceding claims, **characterised in that** the reaction is carried out with a pH value between pH 7.5 and pH 11.

8. Method according to one of the preceding claims, **characterised in that** the reaction is carried out with a pH value between pH 9.5 and pH 11.

9. Method according to one of the preceding claims, **characterized in that** the enzyme activity is set above 0.005 [U/ml], but in particular above 0.02 [U/ml].

10. Method according to one of the preceding claims, **characterized in that** the dilution of enzymes with the solvent is selected between 1:5 and 1:20.

11. Method according to one of the preceding claims, **characterised in that** the polar solvent consists of one or a mixture of two or more of the following solvents:
petroleum ether / acetone / tetrahydrofuran / ethyl acetate / DMSO / acetonitrile / ethanol / water.

12. Method according to one of the preceding claims, **characterised in that** the decomposition reaction is conducted by means of a 3-phase system in a continuous process, wherein a polar reaction phase consisting of one or a mixture of two or more solvents, petroleum ether / acetone / tetrahydrofuran / ethyl acetate / DMSO / acetonitrile / ethanol / water, a non-polar recovery phase consisting of or a mixture of petroleum ether / diethyl ether / ethyl acetate and a solid phase of inert substances such as fillers, inorganic contaminations and residual foam is used.

13. Method according to one of the preceding claims, **characterised in that** the extraction of the reaction products is conducted in reverse flow.

14. Method according to one of the preceding claims, **characterised in that** the gained components mixture of the non-polar phase is subjected to distillation to gain the pure fractions.

## Revendications

1. Procédé de recyclage de polyuréthanes, dans lequel le matériau de départ est broyé grossièrement, mis en suspension puis mélangé à une enzyme, l'hydrolyse du polyuréthane étant effectuée dans de l'eau ou dans un mélange de solvants polaire contenant de l'eau à l'aide d'au moins une hydrolase de classe EC 3, **caractérisé en ce que** le solvant polaire est isolé partiellement et régénéré dans un processus séparé, et **en ce que** les produits de réaction sont retirés de l'équilibre réactionnel par extraction avec un solvant apolaire.

2. Procédé selon la revendication 1, **caractérisé en ce que** le polyuréthane est basé sur des polyétherpolyoles.

3. Procédé selon la revendication 1 ou 2, **caractérisé en ce que** le polyuréthane est basé sur une réaction de polymérisation avec du diphénylméthane diisocyanate (MDI) ou du toluylènediisocyanate (TDI).

4. Procédé selon l'une des revendications précédentes, **caractérisé en ce que** l'enzyme utilisée est aux choix une hydrolase du groupe suivant
- Aryl-acylamidase (Polyamidase)
- Carboxylesterase (Rapidase)
- Cutinase
- Triacylglycéerol lipase.

5. Procédé selon l'une des revendications précédentes, **caractérisé en ce que** l'enzyme utilisée est une aryl-acylamidase (polyamidase).

6. Procédé selon l'une des revendications précédentes, **caractérisé en ce que** la température de réaction est maintenue entre 32 °C et 47 °C.

7. Procédé selon l'une des revendications précédentes, **caractérisé en ce que** la réaction est réalisée à une valeur de pH comprise entre pH 7,5 et pH 11.

8. Procédé selon l'une des revendications précédentes, **caractérisé en ce que** la réaction est réalisée à une valeur de pH comprise entre pH 9,5 et pH 11.

9. Procédé selon l'une des revendications précédentes, **caractérisé en ce que** l'activité enzymatique est réglée à plus de 0,005 [U/ml], en particulier toutefois à plus de 0,02 [U/ml].

10. Procédé selon l'une des revendications précédentes, **caractérisé en ce que** la dilution de l'enzyme avec le solvant est choisie entre 1:5 et 1:20.

11. Procédé selon l'une des revendications précédentes, **caractérisé en ce que** le solvant polaire est composé de l'un des solvants suivants ou d'un mélange de deux de ces solvants ou plus :
Éther de pétrole/acétone/tétrahydrofuranne/acétate d'éthyle/DMSO/acétonitrile/éthanol/eau.

12. Procédé selon l'une des revendications précédentes, **caractérisé en ce que** la réaction de décomposition se fait à l'aide d'un système à 3 phases en processus continu, dans lequel on utilise une phase de réaction polaire composée d'un des solvants suivants ou d'un mélange de deux de ces solvants ou plus éther de pétrole/acétone/tétrahydrofuranne/acétate d'éthyle/DMSO/acétonitrile/éthanol/eau, une phase de récupération apolaire composée d'un ou d'un mélange d'éther de pétrole/diéthyléther/acétate d'éthyle, et d'une phase solide composée de matières inertes comme des matières de charge, des impuretés inorganiques et de la mousse résiduelle.

13. Procédé selon l'une des revendications précédentes, **caractérisé en ce que** l'extraction des produits de réaction est réalisée à contre-courant.

14. Procédé selon l'une des revendications précédentes, **caractérisé en ce que** le mélange de composants obtenu à partir de la phase apolaire est soumise à une distillation pour obtenir des fractions pures.
